# EUROPEAN PATENT APPLICATION

(11) **EP 4 375 744 A1**
(43) Date of publication of application: **29.05.2024**
(21) Application number: 22209252.0
(22) Date of filing: 24.11.2022
(51) Int. Cl.: G02F 1/35, G02F 1/365

(54) **PHOTONIC INTEGRATED CIRCUIT FOR GENERATING BROADBAND RADIATION**

(71) Applicant: ASML Netherlands B.V., 5500 AH Veldhoven (NL)
(72) Inventor: SAHIN, Ezgi, 5500 AH Veldhoven (NL); AKBULUT, Duygu, 5500 AH Veldhoven (NL); ABDOLVAND, Amir, 5500 AH Veldhoven (NL)
(74) Representative: ASML Netherlands B.V.

(57) **Abstract**

A photonic integrated circuit comprises an optical input configured to receive pump radiation, and a plurality of nonlinear elements connected to the optical input. The plurality of nonlinear elements are configured to generate broadband radiation upon receiving the pump radiation. At least two of the plurality of nonlinear elements differ in at least a material and/or a dimension.

## Description

### FIELD

The present invention relates to generating broadband radiation in a photonic integrated circuit. In particular, it relates to generating broadband radiation in a photonic integrated circuit having a plurality of nonlinear elements wherein at least two of the nonlinear elements have different properties.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k₁.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Some measurement systems may use radiation with a range different wavelengths to perform one or more measurements. This may be enabled for example by providing a broadband radiation source, such as a supercontinuum radiation source. Such sources may be complex and costly to produce, and it is an aim of the current disclosure to improve at least some of the challenges that currently exist in broadband radiation generation.

### SUMMARY

According to a first aspect of the current disclosure there is provided a photonic integrated circuit comprising an optical input configured to receive pump radiation, and a plurality of nonlinear elements connected to the optical input. The plurality of nonlinear elements are configured to generate broadband radiation upon receiving the pump radiation. At least two of the plurality of nonlinear elements differ in at least a material and/or a dimension.

Optionally, the nonlinear elements may be waveguides.

Optionally, at least one nonlinear element of the plurality of nonlinear elements comprises aluminium nitride AlN.

Optionally, the material of the plurality of nonlinear elements may comprise one or more of diamond, silicon nitride, aluminium nitride, lithium niobate, and gallium arsenide.

Optionally, the at least two of the plurality of nonlinear elements may differ in dimension, wherein the dimension comprises a cross-sectional thickness in a plane perpendicular to a propagation direction of radiation in the nonlinear element.

Optionally, the thickness may differ along a portion of a length of the nonlinear element, wherein the portion is less than the full length of the waveguide.

Optionally, the at least two of the plurality of nonlinear elements may differ in dimension, wherein the dimension comprises a length along a propagation direction of the nonlinear element.

Optionally, the plurality of nonlinear elements may be located in a same plane of a substrate of the photonic integrated circuit.

Optionally, one or more of the plurality of nonlinear elements may comprise a stacked arrangement of layers of materials, and wherein the at least two of the plurality of nonlinear elements may have a different composition of layers of materials.

Optionally, the photonic integrated circuit may further comprise a merging element configured to receive the broadband radiation generated in each of the plurality of nonlinear elements and may merge it into a single broadband radiation beam.

Optionally, the plurality of nonlinear elements may comprise 3 - 50 nonlinear elements, or 15 - 50 nonlinear elements.

Optionally, the broadband radiation may comprise supercontinuum radiation.

Optionally, the supercontinuum radiation may comprise radiation with wavelengths in a range from 100 nm to 2000 nm, in a range from 200 nm to 2000 nm, or in a range from 200 nm - 1600 nm.

Optionally, the pump radiation may comprise a pulsed pump radiation beam.

Optionally, the pump radiation may comprise one or more wavelengths in a range of 400 nm to 2000 nm, or 1000 - 1500 nm.

Optionally, the pump radiation may comprise a single pump radiation beam.

Optionally, the optical input may comprise a single optical input connected to all of the plurality of non-linear elements.

Optionally, the single optical input may comprise a star coupler.

According to another aspect of the current disclosure there is provided a broadband radiation source comprising a photonic integrated circuit as described above.

According to another aspect of the current disclosure there is provided a metrology apparatus comprising a broadband source as described above.

According to another aspect of the current disclosure there is provided an inspection apparatus comprising a broadband source as described above.

According to another aspect of the current disclosure there is provided a lithography apparatus comprising a broadband source as described above.

According to another aspect of the current disclosure there is provided a litho cell comprising a broadband radiation source, a metrology apparatus, an inspection apparatus, and/or a lithographic apparatus as described above.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 depicts a schematic representation of a photonic integrated circuit having a plurality of nonlinear elements; and
- Figure 8 depicts a schematic representation of a photonic integrated circuit having a plurality of nonlinear elements wherein at least two nonlinear elements have a different dimension.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

### <Reticle>

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

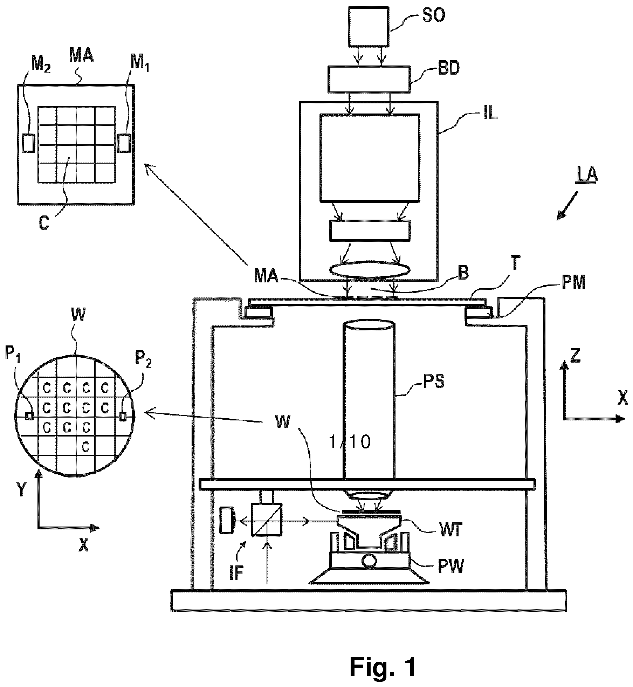

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

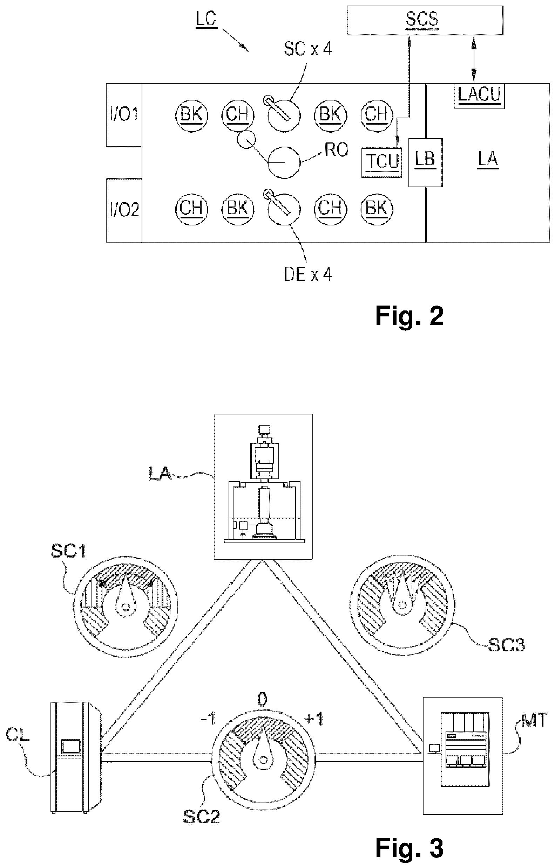

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3). Different types of metrology tools MT for measuring one or more properties relating to a lithographic apparatus and/or a substrate to be patterned will now be described.

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

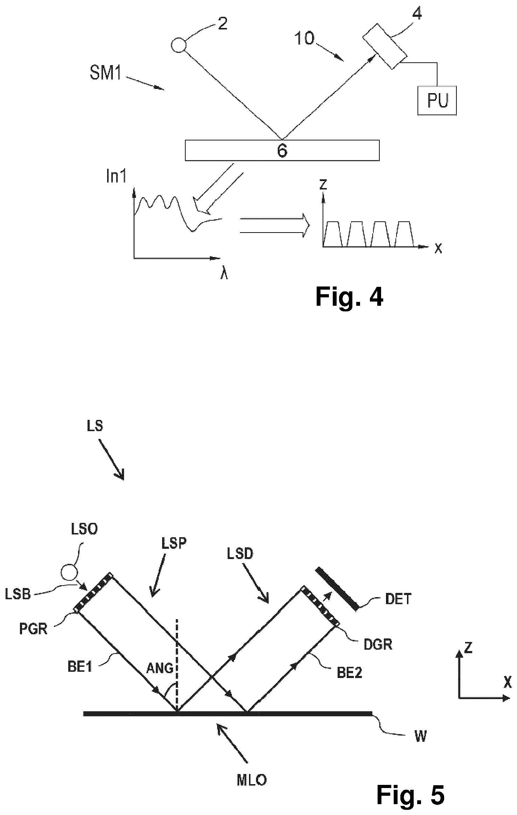

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

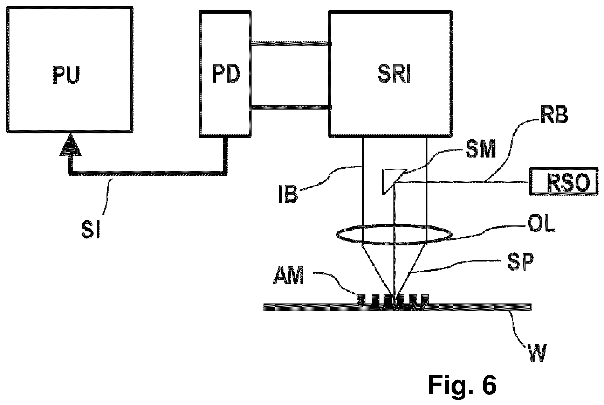

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology and/or inspection tools (also referred to as measurement tools) such as the ones described above often use radiation to obtain measurement data. Depending on the measurement target and the properties to be measured, different types of radiation may be used. One differing property of radiation is the wavelength(s) used to obtain a measurement, as different wavelengths may provide different information about a measurement target. Some measurement tools may use broadband radiation, such as supercontinuum radiation, either to measure using broadband radiation, or to be able to tune and select the measurement wavelength(s) to be used. Depending on the range of output wavelengths and properties of the broadband source, difference methods may be used to obtain the broadband radiation. To generate broadband radiation, nonlinear effects may be used to broaden narrow wavelength range input radiation (also referred to as pump radiation). Different known setups and methods exist to achieve nonlinear broadening. Often these methods rely on the confinement of the pump radiation to achieve high intensities needed to experience significant nonlinear effects.

A known method of confining radiation for nonlinear broadening includes confinement of laser pump radiation inside an optical fiber, to generate supercontinuum radiation. The laser may be an ultrashort pulsed laser (e.g. pico- to femto-second pulses). The nonlinear propagation dynamics of this radiation inside a fiber may lead to broadband radiation generation as a result of soliton self-compression and/or modulational instability. This may for example be used to generate supercontinuum radiation spanning a wavelength range from IR to UV.

Soliton dynamics may also be achieved in integrated optical elements, such as integrated waveguides. Integrated optics, also referred to as photonic integrated circuits, in this context, may refer to planar optical structures integrated (e.g. patterned) on a substrate such as a semiconductor wafer. They may also be referred to as on-chip optics. Although many lithographic semiconductor methods and techniques known from integrated electronics may be used, specific optical considerations may have to be taken into account, such as the transparency of materials for the radiation wavelengths of interest. Integrated optics may have dimensions going down to the order of micrometers or sub-micrometers (e.g. cross-sections). Careful adjustment of the dimensions of the integrated optical elements (possible because of the use of advanced semiconductor electronics fabrication techniques) may lead to a precise control over the propagation dynamics of radiation in integrated waveguides. When ultrashort laser pulses propagate through an integrated optical waveguide, strong confinement under controlled conditions may be achieved. This may lead to generation of broadband (e.g. supercontinuum) radiation inside integrated waveguides.

In order to control broadband radiation generation, the chromatic dispersion profiles at the interaction region of the pump radiation with the nonlinear medium are controlled. In setups using broadband generation inside a hollow core fiber, this may be achieved by fine tuning dimensions, pressures (e.g. pressure of a nonlinear gas inside the fiber), and cross-sectional shapes inside the fiber. Inside a solid core fiber, fine tuning of the core diameter and geometry of the microstructure cladding surrounding the core may be used. In both cases, this relies on fine tuning of the fiber fabrication processes, which often relies heavily on human intervention, and may not have a high degree of automation available. For example fiber preform assembly may be performed manually by an expert/artisan. In the case of photonic crystal fibers, small-scale (.g, nm-scale) control of the geometry of the cladding may be needed to accurately tune optical properties. As a result, accuracy and repeatability of the human-dependent fine tuning may not be guaranteed by a controllable industrial process, which may reduce the yield of the fiber. As soliton propagation and resulting supercontinuum generation relies heavily on the dispersion characteristics of the fiber, the detailed geometry of the structure plays an important role.

While fiber manufacturing processes may rely on artisan skill, integrated photonics does provide methods that enable a high degree of fine tuning control of optical elements, by making use of advanced and precise semiconductor manufacturing techniques. These may provide a high level of accuracy and repeatability that is desirable for nonlinear propagation media for broadband generation.

The field of integrated optics has made progress in recent years, using mature semiconductor (CMOS) fabrication processes to advance integrated optics fabrication. Material platforms such as Si₃N₄ have made progress to reduce propagation losses. A propagation loss of 3 dB/m in Si₃N₄ can now be achieved. This allows to for the efficient use optical elements such as integrated optical frequency combs. One of the fundamental building blocks in photonic integrated circuits are waveguides. Waveguides may confine and guide radiation, for example between other integrated optical elements. Waveguides may be fabricated using standard lithographic patterning techniques. In a photonic integrated waveguide, radiation may be confined in a small cross-sectional area. This may be due to a high index contrast between the waveguide material and the cladding. The tight confinement may enhance interaction of the radiation with the material of the waveguide, which facilitates improved nonlinear processes. As a result, waveguides made from a material with high nonlinear interaction properties may be used to achieve on-chip, integrated non-linear interaction of radiation. This may for example include broadband radiation generation.

While fabrication methods for integrated waveguides are advanced, they experience challenges to be implemented for broadband radiation generation. A first challenge is power scalability. A second challenge is material choices with a large transparency window to cover the entire broadband range, and that are suitable for use in semiconductor fabrication techniques. Described herein are ways to overcome at least some of these challenges in order to provide improved integrated optical structures for broadband radiation generation

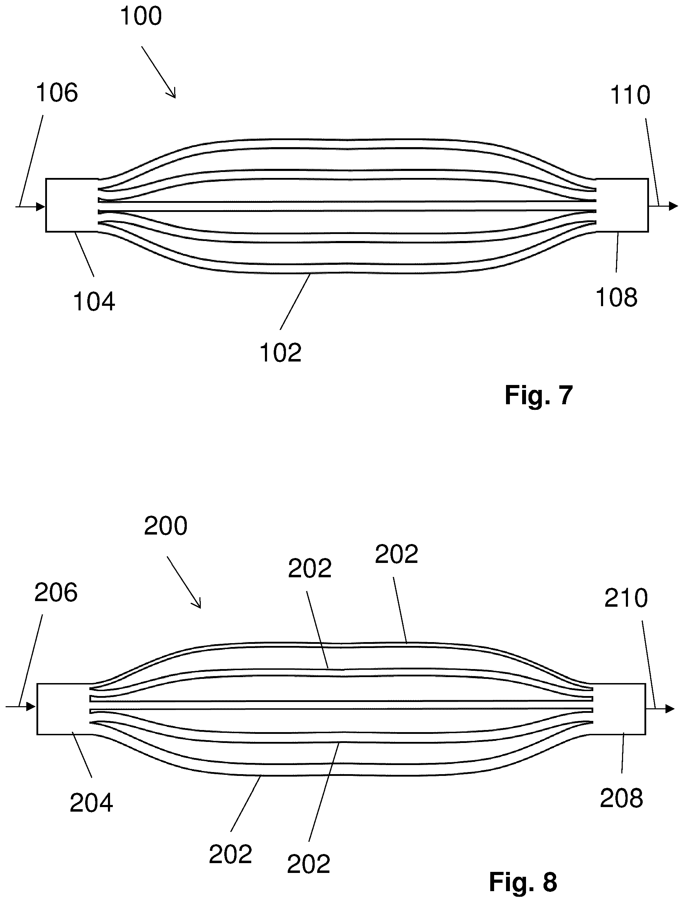

Figure 7 depicts a schematic representation of a photonic integrated circuit (PIC) 100. The photonic integrated circuit comprises an optical input 104 configured to receive pump (input) radiation 106. The photonic integrated circuit further comprises a plurality of nonlinear elements 102 that are connected to the optical input 104. The nonlinear elements 102 may be photonic integrated waveguides. The plurality of nonlinear elements 102 are configured to generate broadband radiation 110 upon receiving the pump radiation 106. At least two of the nonlinear elements 102 differ in at least a material and/or dimension. The broadband radiation 110 may comprise supercontinuum radiation.

The broadband radiation 110 may be collected by a merging element 108 and provided as output from the photonic integrated circuit 100. The merging element 108 may receive broadband radiation 110 from the plurality of nonlinear elements 102, and may merge it into a single radiation beam. The plurality of nonlinear elements 102 may provide a plurality of radiation beams. At least two of the plurality of radiation beams may have a different power density spectrum. At least two of the plurality of radiation beams may span different wavelength ranges, and/or may have a different beam cross-sectional shape as they reach the merging element.

The photonic integrated circuits described herein aim to solve some of the problems currently experienced by photonic integrated circuits by providing multiple nonlinear elements with different properties. An advantage of a photonic integrated circuit as depicted in figure 7, may be that the plurality of nonlinear elements can improve the power scalability of a photonic integrated setup, by providing a plurality of parallel nonlinear elements, each of which may receive input radiation and generate broadband radiation to be output. Another advantage of a PIC as described herein may be bandwidth scalability, in that the differing properties of at least two of the nonlinear elements may enable those two nonlinear elements to have different dispersive properties, and as a result generate different ranges of broadband radiation. The resulting broadband radiation generated by the photonic integrated circuit as a whole may therefore have a broader wavelength range and/or power density spectrum than may be achieved by a single waveguide. Further advantages of providing an photonic integrated circuit over for example optical fibers may include miniaturization of the structure, and more precise control over the geometry of the structure, as described above. As an illustrative example, a photonic integrated circuit (PIC) may have dimensions of the order of approximately 1 cm by approximately 1 cm, while an optical fiber may have a length of the order of 10s of cm, or of the order of meters. The PIC may therefore provide a miniaturization of several orders of magnitude.

In order to be eligible as a material from which to construct a portion of the photonic integrated circuit, the material should be suitable for use in integrated fabrication methods, such as semiconductor lithography fabrication methods. Furthermore, the material should also possess suitable optical transparency properties for the desired wavelengths. A lot of existing, known materials (e.g. silicon-on-insulator (SOI), indium-phosphide-membranes on silicon (IMOS)) used in lithography (e.g. for electronics fabrication) are not transparent to UV and/or visible radiation, which comprise radiation wavelengths of interest for the applications described herein. Therefore, these known materials may not be suitable for the photonic integrated circuits described herein. Materials that have transparency windows in either the UV and/or visible wavelength ranges which are compatible with semiconductor lithography manufacturing techniques include diamond, silicon nitride, aluminium nitride, lithium niobate, and gallium arsenide. One or more of the plurality of nonlinear elements may be made from these materials. In some implementations, all the of the nonlinear elements are made from the same one or more materials. In other implementations, at least two of the nonlinear elements may have different compositions of one or more different materials. Some or all of those materials may be from the materials mentioned above.

The nonlinear elements may comprise a stacked arrangement of layers of materials. At least two of the plurality of nonlinear elements may have a different stacked composition with respect to each other. The stacked compositions, and in particular the differences between stacked compositions of different nonlinear elements may enable the design of nonlinear elements with differing dispersive properties. This may allow the broadband generation to be tuned/optimised for different wavelength ranges across the nonlinear elements. An example of a stacked composition is described in "High-efficiency wideband SiNx-on-SOI grating coupler with low fabrication complexity" (Pengfei Xu et al, Optics Letters, 42, 17, 2017). This example of SiNₓ-on-SOI is referenced for illustrative purposes only and is not intended to limit the scope of possible compositions for the nonlinear elements described herein. Further example materials that may be used in a stacked or individual composition are provided in the paragraphs below.

One or more of the nonlinear elements may comprise aluminium nitride AlN. AIN may be a material of particular interest for use as a nonlinear element, such as a waveguide, due to its wide transparency window, covering portions of UV, visible, and near infrared radiation,. Another reason to consider AlN may be that it possesses a high nonlinear refractive index (n₂ = 2.3 × 10⁻¹⁵ cm²/W). Due to the crystal structure of AlN, which is noncentrosymmetric, the material possesses second-order optical nonlinearities (χ⁽²⁾ =4.7 pm/V). Such second-order optical nonlinearities may be inherently absent from other platforms such as SOI (Silicon-On-Insulator) or silicon nitride SiN. This nonlinear index may be relatively high compared to other nonlinear media. For example, argon and helium have nonlinear refractive indices of 10.9 × 10⁻²⁰ cm²/W and 0.94 × 10⁻²⁰ cm²/W at 800 nm, respectively.

In addition to third order nonlinear effects χ⁽³⁾ like soliton propagation, AlN also supports frequency mixing through χ⁽²⁾ effects such as second harmonic generation (SHG), sum-frequency generation (SFG) and difference frequency generation (DFG). SHG may also be harnessed in addition to the soliton induced supercontinuum generation to increase the spectral width towards the visible range, for example when using pump radiation at 1030 nm. Having both second and third order optical nonlinear processes on the same platform may have an advantage of allowing for cascaded nonlinear effects to occur further increasing the bandwidth of the supercontinuum generation

To harness different linear and nonlinear properties on a single chip, different materials such as silicon nitride, diamond, aluminum nitride and aluminum oxide, or any other suitable materials may be grown on the same substrate. The different materials may be grown next to and/or on top of each other. A cladding material transparent in the relevant broadband radiation range of interest may be grown in between layers for separation. An example cladding material may be SiO₂. A material that is best suited for operation at a particular wavelength range may be utilized for broadening of the spectrum at that range. All spectra generated in different waveguides may be combined together to obtain a wide broadband spectrum. Materials such as lithium niobate and gallium arsenide also have established protocols for second harmonic generation on lithographic substrate. Wideband quasi-phase matching for the χ⁽²⁾ processes may be realized through periodic poling of the material. This may be used to further extend the spectral reach of supercontinuum generation in an integrated photonic circuit.

As described above, in addition to or as an alternative to using different materials (or combinations of materials), two or more of the nonlinear elements may have different dimensions. Fabricating waveguides with different dimensions on the same PIC may enhance the supercontinuum generation, by optimizing broadband generation performance over different wavelength ranges for different waveguides. A dimension may comprise a cross-section of the waveguide in a plane perpendicular to a propagation direction of radiation inside the waveguide. Additionally or alternatively, two or more of the nonlinear elements may also differ in length, wherein a length may be along a propagation direction of the waveguide.

Figure 8 depicts a schematic representation of a photonic integrated circuit (PIC) 200. The photonic integrated circuit comprises an optical input 204 configured to receive pump (input) radiation 206. The photonic integrated circuit further comprises a plurality of nonlinear elements 202 that are connected to the optical input 204. The nonlinear elements 202 may be photonic integrated waveguides. The plurality of nonlinear elements 202 are configured to generate broadband radiation 210 (e.g. supercontinuum radiation) upon receiving the pump radiation 206. At least two of the nonlinear elements 202 differ in at least a dimension. The broadband radiation 210 may be collected by a merging element 208 and provided as output from the photonic integrated circuit 200. Phase matching for dispersive wave generation at different wavelengths can be engineered across the different nonlinear elements to generate radiation over a wide range at sufficient power levels.

As depicted in figure 8, the waveguides 202 may differ in a width of the waveguide in a cross-sectional plane, and in the plane of the photonic integrated circuit 200. The different cross-sectional widths may support different broadband radiation generation ranges. In some implementations, the material composition for each of the waveguides may be the same, in a setup using different dimensions. In some other implementations, both the material composition and dimension may differ. Each of the plurality of nonlinear elements may be positioned in the same plane of the PIC. This may be the plane of the substrate.

The photonic integrated circuits described herein may comprise in a range of 3 to 50 nonlinear elements, or 15 - 50 nonlinear elements. This may for example be a PIC with 3 - 50 waveguides positioned side by side.

The optical input may be a single optical input that is connected to each of the plurality of nonlinear elements. The optical output may be a single optical output connected to each of the plurality of nonlinear elements. Input module and/or output module may comprise a star coupler. Further elements may be provided in the input module and/or output module, in order to achieve wavelength filtering, source routing, coherence scrambling, etc. In setups using fibers (e.g. photonic crystal fibers), coupling may be challenging, due to different mode sizes. In integrated optics, established packaging technologies in foundries for chip to fiber coupling may be used. This may allow simplification of the broadband radiation coupling/connection process. It may also make the source more robust to coupling related power fluctuations. Harnessing the packaging possibilities may also enable cutting down on the maintenance costs, e.g. by enabling a quick-change configuration in which the PIC can be replaced with relative ease.

Some of the waveguides of the PIC may have the same dimensions and material composition. For example, a PIC may be provided which has 1 waveguide at a first thickness, 2 waveguides at a second thickness, 1 waveguide at a third thickness, 3 waveguides at a fourth thickness etc. The number of waveguides having the same dimensions/compositions may for example be selected to obtain a chosen/preferred power distribution across the broadband spectrum.

The broadband radiation may comprise supercontinuum radiation. The supercontinuum radiation may comprise radiation in a range spanning from ultraviolet UV to infrared IR radiation. This may be for example from 100 nm - 2000 nm, from 200 nm to 2000 nm, or in a range from 200 nm to 1600 nm.

The pump radiation may be pulsed pump radiation. The pump radiation may be a single (pulsed) radiation beam provided to the optical input of the PIC. The radiation may be in a range from 400 nm to 2000 nm, or in a range from 800 nm to 1600 nm. The pulse radiation may comprise radiation at one or more specific wavelengths, for example 400 nm, 515 nm, 800 nm, 1030 nm, 1550 nm, and/or 2000 nm.

Further embodiments of the invention are disclosed in the list of numbered clauses below:
1. A photonic integrated circuit comprising:
   an optical input configured to receive pump radiation; and
   a plurality of nonlinear elements connected to the optical input and configured to generate broadband radiation upon receiving the pump radiation, wherein at least two of the plurality of nonlinear elements differ in at least a material and/or a dimension.
2. A photonic integrated circuit according to clause 1, wherein the nonlinear elements are waveguides.
3. A photonic integrated circuit according to any of the preceding clauses, wherein at least one nonlinear element comprises aluminium nitride.
4. A photonic integrated circuit according to any of the preceding clauses, wherein the material of the plurality of nonlinear elements comprises one or more of diamond, silicon nitride, aluminium nitride, lithium niobate, and gallium arsenide.
5. A photonic integrated circuit according to any of the preceding clauses, wherein the at least two of the plurality of nonlinear elements differ in dimension, wherein the dimension comprises a cross-sectional thickness in a plane perpendicular to a propagation direction of radiation in the nonlinear element.
6. A photonic integrated circuit according to clause 5, wherein the thickness differs along a portion of a length of the nonlinear element, wherein the portion is less than the full length of the waveguide.
7. A photonic integrated circuit according to any of the preceding clauses, wherein the at least two of the plurality of nonlinear elements differ in dimension, wherein the dimension comprises a length along a propagation direction of the nonlinear element.
8. A photonic integrated circuit according to any of the preceding clauses, wherein the plurality of nonlinear elements are located in a same plane of a substrate of the photonic integrated circuit.
9. A photonic integrated circuit according to any of the preceding clauses, it, wherein one or more of the plurality of nonlinear elements comprise a stacked arrangement of layers of materials, and wherein the at least two of the plurality of nonlinear elements have a different composition of layers of materials.
10. A photonic integrated circuit according to any of the preceding clauses, further comprising a merging element configured to receive the broadband radiation generated in each of the plurality of nonlinear elements and merge it into a single broadband radiation beam.
11. A photonic integrated circuit according to any of the preceding clauses, wherein the plurality of nonlinear elements comprise 3 - 50 nonlinear elements, or 15 - 50 nonlinear elements.
12. A photonic integrated circuit according to any of the preceding clauses, wherein the broadband radiation comprises supercontinuum radiation.
13. A photonic integrated circuit according to clause 12, wherein the supercontinuum radiation comprises radiation with wavelengths in a range from 200 nm to 2000 nm, or in a range from 200 nm - 1600 nm.
14. A photonic integrated circuit according to any of the preceding clauses, wherein the pump radiation comprises a pulsed pump radiation beam.
15. A photonic integrated circuit according to clause 14, wherein the pump radiation comprises one or more wavelengths in a range of 400 nm to 2000 nm, or 1000 - 1500 nm.
16. A photonic integrated circuit according to any of the preceding clauses, wherein the pump radiation comprises a single pump radiation beam.
17. A photonic integrated circuit according to any of the preceding clauses, wherein the optical input comprises a single optical input connected to all of the plurality of non-linear elements.
18. A photonic integrated circuit according to clause 17, wherein the single optical input is a star coupler.
19. A broadband radiation source comprising the photonic integrated circuit according to any of clauses 1 - 18.
20. A metrology apparatus comprising a broadband source according to clause 19.
21. An inspection apparatus comprising a broadband source according to clause 19.
22. A lithography apparatus comprising a broadband source according to clause 19.
25. A litho cell comprising an apparatus according to any of clauses 20 - 22.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A photonic integrated circuit comprising:
an optical input configured to receive pump radiation; and
a plurality of nonlinear elements connected to the optical input and configured to generate broadband radiation upon receiving the pump radiation, wherein at least two of the plurality of nonlinear elements differ in at least a material and/or a dimension.

2. A photonic integrated circuit according to claim 1, wherein the nonlinear elements are waveguides.

3. A photonic integrated circuit according to any of the preceding claims, wherein at least one nonlinear element comprises aluminium nitride.

4. A photonic integrated circuit according to any of the preceding claims, wherein the material of the plurality of nonlinear elements comprises one or more of diamond, silicon nitride, aluminium nitride, lithium niobate, and gallium arsenide.

5. A photonic integrated circuit according to any of the preceding claims, wherein the at least two of the plurality of nonlinear elements differ in dimension, wherein the dimension comprises a cross-sectional thickness in a plane perpendicular to a propagation direction of radiation in the nonlinear element.

6. A photonic integrated circuit according to claim 5, wherein the thickness differs along a portion of a length of the nonlinear element, wherein the portion is less than the full length of the waveguide.

7. A photonic integrated circuit according to any of the preceding claims, wherein the at least two of the plurality of nonlinear elements differ in dimension, wherein the dimension comprises a length along a propagation direction of the nonlinear element.

8. A photonic integrated circuit according to any of the preceding claims, wherein the plurality of nonlinear elements are located in a same plane of a substrate of the photonic integrated circuit.

9. A photonic integrated circuit according to any of the preceding claims, it, wherein one or more of the plurality of nonlinear elements comprise a stacked arrangement of layers of materials, and wherein the at least two of the plurality of nonlinear elements have a different composition of layers of materials.

10. A photonic integrated circuit according to any of the preceding claims, further comprising a merging element configured to receive the broadband radiation generated in each of the plurality of nonlinear elements and merge it into a single broadband radiation beam.

11. A photonic integrated circuit according to any of the preceding claims, wherein the plurality of nonlinear elements comprise 3 - 50 nonlinear elements, or 15 - 50 nonlinear elements.

12. A photonic integrated circuit according to any of the preceding claims, wherein the broadband radiation comprises supercontinuum radiation comprising radiation with wavelengths in a range from 200 nm to 2000 nm, or in a range from 200 nm - 1600 nm.

13. A photonic integrated circuit according to any of the preceding claims, wherein the optical input comprises a single optical input connected to all of the plurality of non-linear elements.

14. A broadband radiation source comprising the photonic integrated circuit according to any preceding claim.

15. A metrology or inspection apparatus comprising the broadband source according to claim 14.
